# EUROPEAN PATENT SPECIFICATION

(11) **EP 1 747 847 B1**
(45) Date of publication and mention of the grant of the patent: **13.02.2008**
(21) Application number: 06115113.0
(22) Date of filing: 08.06.2006
(51) Int. Cl.: B23Q 41/02, B23Q 7/00, B65G 47/90, B25J 9/10

(54) **Transfer device and line of machining units, provided with the same**
Transfervorrichtung und Bearbeitungslinie mit mehreren Maschinen und Transfervorrichtung
Dispositif transfer et ligne de machines pour l'usinage equipée avec le dispositif

(30) Priority: 25.07.2005 IT TO20050511
(43) Date of publication of application: 31.01.2007
(73) Proprietor: COMAU S.p.A., 10095 Grugliasco (Torino) (IT)
(72) Inventor: Braga, Piero, 10137 Torino (IT)
(74) Representative: Notaro, Giancarlo

(56) References cited:
- EP-A- 1 234 642
- EP-A2- 1 266 721
- WO-A-92/10360

## Description

The present invention relates to a line of operating units for the execution of a sequence of machining operations on a set of pieces that are fed in succession at one loading end of the line and proceed along the line as far as one unloading end of the line, in which said line comprises means for transferring the pieces from the loading end to the first unit of the line, from each unit of the line to the next one, and from the last unit of the line to the unloading end.

In lines of the type referred to above, made up of a succession of operating units or work centres, devices of various types are provided for transferring the pieces from one unit of the line to another. Provided in more traditional systems are transfer devices that simultaneously cause all the pieces that are located along the line to advance by one step along the line. Said traditional solution is not, however, particularly efficient. In general, in fact, the various units along the line execute cycles of operations of different duration. With a rigid transfer system of the type described above it is, however, necessary for all the units to have completed the respective cycles of operations to be able to start to execute the step of transfer of each piece from one unit to another.

In the past, transfer devices of a flexible type have been also proposed, in which set between each unit of the line and the next unit is a transfer device that operates independently of the others, in order to reduce as much as possible the dead times during the production cycle. The present applicant has presented, for example, different robot solutions (see, for example, the patent No. US 5 522 275), designed for transfer of pieces between the stations of a production line of any type. Obviously, transferring devices in the form of robots present the drawback of being relatively costly, cumbersome, and of penalizing accessibility and cleanliness of their working area and hence are not always suited to being applied in a line of machining centres. On the other hand, the need to increase productivity is increasingly felt, particularly in the automotive industry, also as a result of the trend that has developed in the last few years to concentrate frequently a number of production sites in a single plant.

In the specific field of lines for carrying out machining (consider, for example, a production line for producing cylinder heads for the engines of motor vehicles), the need for a high productivity always accompanies that of a maximum reduction of the production costs. A solution for a line of machining centres provided with devices for transferring pieces from one unit of the line to another is described in the Japanese patent application No. JP-A-1114783. Said known device envisages transfer devices each made up of a pair of arms mounted articulated at the bottom about a horizontal axis and oscillating with their top ends along a vertical arc between two end positions adjacent, respectively, to the two units of the line set upstream and downstream of the transfer device. Said known solution presents the drawback of being relatively complicated and of not being efficient, in particular in so far as the pieces are transferred along an arched path and consequently must be raised from the starting position to reach the apex of the arc, with a consequent useless expenditure of energy.

A first solution to the problems set forth above has been offered by the present applicant in his European patent No. EP 1 26 721 upon which the preamble of Claim 1 is based, in said known solution, the transfer means include a fixed framework comprising a plurality of horizontal supporting and guide beams, in an overhead position. Said beams extend in the longitudinal direction of the line, each in a position corresponding to a space comprised between one operating unit and the adjacent unit, and mounted on each of them is a transfer device, which comprises: a slide that is mobile along the respective supporting beam; a vertical upright mounted on said slide; and gripping means mounted at the bottom end of said vertical upright and orientable about a vertical axis. There are moreover provided motor means for control of the slide and of said gripping means and control means designed to control the motor means of the various transfer devices of the line independently of one another, according to a co-ordinated sequence.

**It is further to be noted that known in the art (see** EP 1 234 642 A1**) are manipulator devices with two articulated arms.**

The purpose of the present invention is to propose an alternative solution to the problems that have been set forth above with reference to the known art.

With a view to achieving said purpose, the subject of the invention is a line of operating units provided with transfer means that present the characteristics specified in Claim 1.

Further advantageous characteristics of the invention are specified in the dependent claims.

The invention will now be described with reference to the annexed plate of drawings, which are provided purely by way of non-limiting example and in which:
- Figure 1 is a perspective view of a line of work centres that uses the transfer means according to the invention;
- Figure 2 is a perspective view of a transfer device according to the invention;
- Figure 3 is a further perspective view of the transfer device of Figure 2, without some parts;
- Figure 4 is a diagram that illustrates the working principle of the transfer device according to the invention;
- Figures 5A-5H are side elevations that show the different configurations assumed by the transfer device of Figure 2 during a normal working cycle; and
- Figure 6 is a perspective view of a machining line according to a variant of the invention.

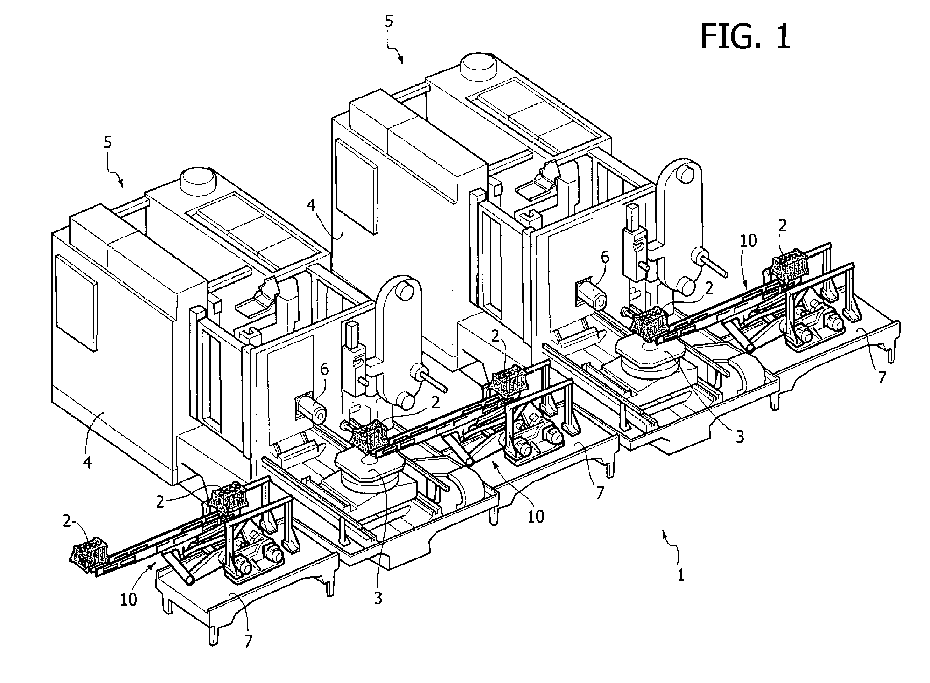

In Figure 1 the reference number 1 designates as a whole a line of units for carrying out machining, in the case in point for machining cylinder heads 2 of internal-combustion engines. The line 1 comprises a set of operating units or work centres of any known type in which a spindle carrying the tool is provided with possibilities of moving along three mutually orthogonal axes, to execute a series of machining operations on the piece 2, which is withheld fixed on a workpiece platform 3 in front of each machining unit. Figure 1 illustrates the bases 4 of two machining units 5 adjacent to one another. Each unit 5 comprises a spindle 6, which is mobile in a vertical direction, in a horizontal direction parallel to the direction A of the line, and in a horizontal direction orthogonal to the direction A.

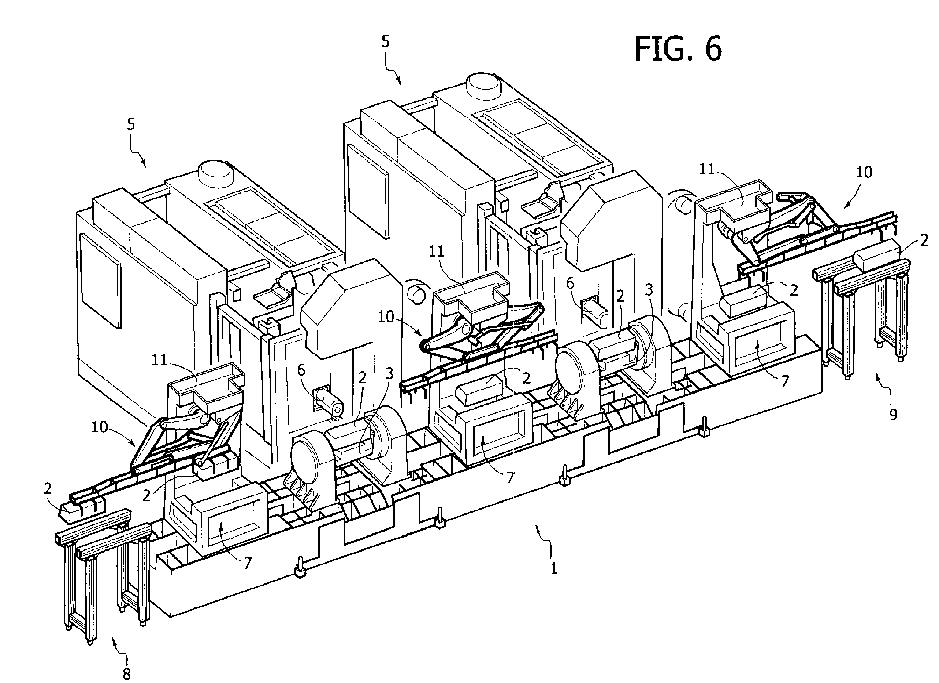

Of course, the means that support the piece 2 in a position corresponding to each working unit can also be provided so as to enable an orientation of the piece, as is for example illustrated in Figure 6, where the piece-holder platform 3 is supported at its ends between two disks that can be oriented about a common horizontal axis parallel to the direction A of the line.

Both in the case of the line illustrated in Figure 1 and in the case of the line illustrated in Figure 6, upstream and downstream of each working unit the line comprises an intermediate workstation 7, on which a piece can be positioned before being introduced into a machining unit and/or after exiting, when machining is finished, from a machining unit. In addition, provided upstream and downstream of the line are a station 8 for loading the pieces within the line and a station 9 for unloading the pieces from the line (visible in Figure 6).

In the case of the examples illustrated, two machining units 5 are provided in all, with two corresponding workstations 3 located in front of them along the line. In addition, the line envisages three intermediate stations 7 upstream and downstream of each of the workstations 3 and the two loading and unloading workstations 8, 9. Of course, the one provided herein is purely a non-limiting example, it being evident that the same principles are applicable to any number of machining units and consequently to any number of stations 3 and 7 along the line. Once again in the case of the specific example illustrated, advance of the pieces 2 along the line is obtained by providing just three transferring devices designated by the reference number 10 in the figures.

As will be evident also from what follows, the transferring devices 10 illustrated in Figure 1 and Figure 6 are substantially identical to one another, with the difference that in the case of Figure 6 said devices have an orientation that is upside down with respect to the one adopted in the solution of Figure 1.

To come now to the description of the specific solution of Figures 1-5, Figure 4 is a schematic illustration of the working principle of each device 10.

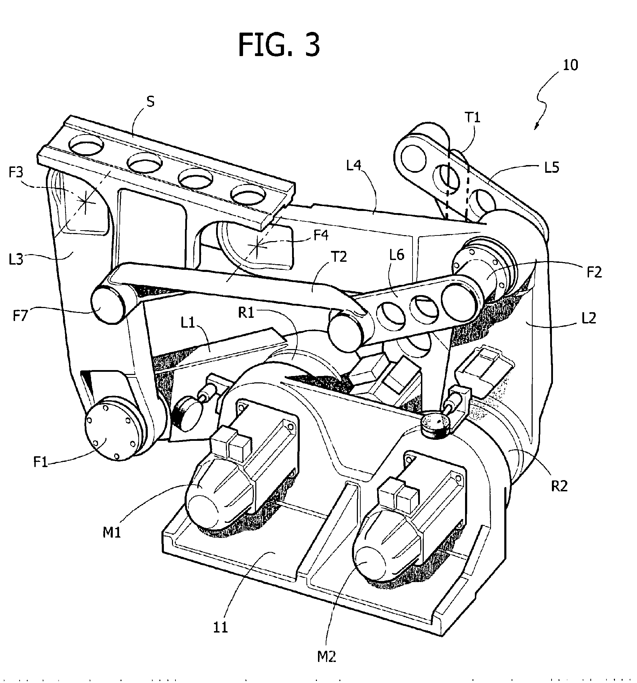

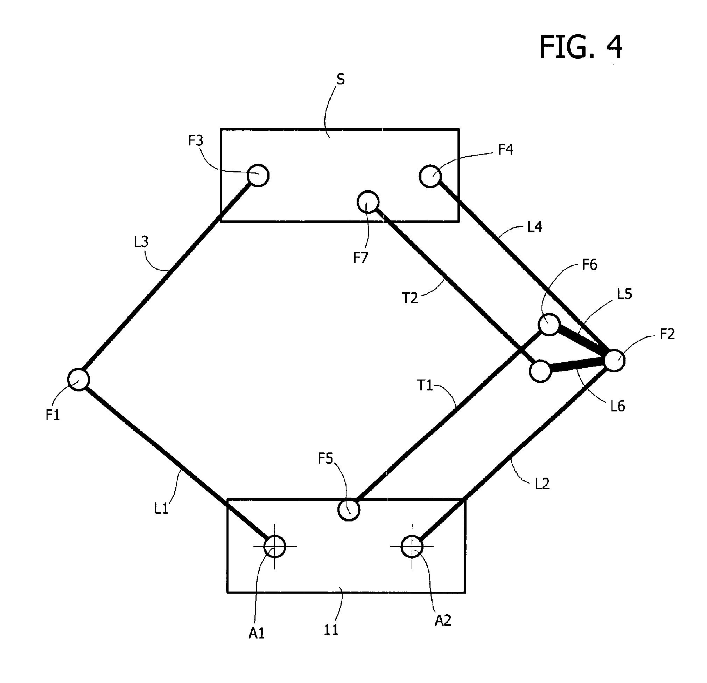

With reference to Figure 4, each transferring device 10 has a structure that is substantially similar to that of a parallel linkage, with two bottom arms L1, L2 articulated at their bottom ends to a fixed base structure 11 about two parallel axes A1, A2, which are horizontal and perpendicular to the longitudinal direction A of the line. The rotation of the bottom arms L1, L2 about the axes A1, A2 is controlled in an independent way by two respective motors M1, M2 by means of reduction units R1, R2 of any known type (see Figures 3, 3A). To return to Figure 4, the two arms L1, L2 have their ends opposite to the articulations A1, A2, which are in turn articulated in F1, F2 to two top arms L3, L4, in turn articulated in F3, F4 to a top structure S that is consequently displaceable, by means of control of the motors M1, M2, with respect to the fixed structure 11 both in the vertical direction and in the horizontal direction of the line. In order to guarantee maintenance of the top structure S according to a position parallel to the base surface, the parallel-linkage structure made up of the four arms L1, L2, L3, L4 is completed by an double-articulated-parallelogram system, which includes a first articulated arm T1 having one end articulated in F5 to the base structure 11 and the opposite end articulated in F6 to an arm L5 that can turn about the articulation F2 between the two arms L2, L4. The arm L5 is fixed in rotation to a second arm L6, which forms a fixed angle with respect to the arm L5. The arm L6 is connected by means of an articulated arm T2 to the top structure S, the arm T2 being articulated to the top structure S in a position corresponding to F7.

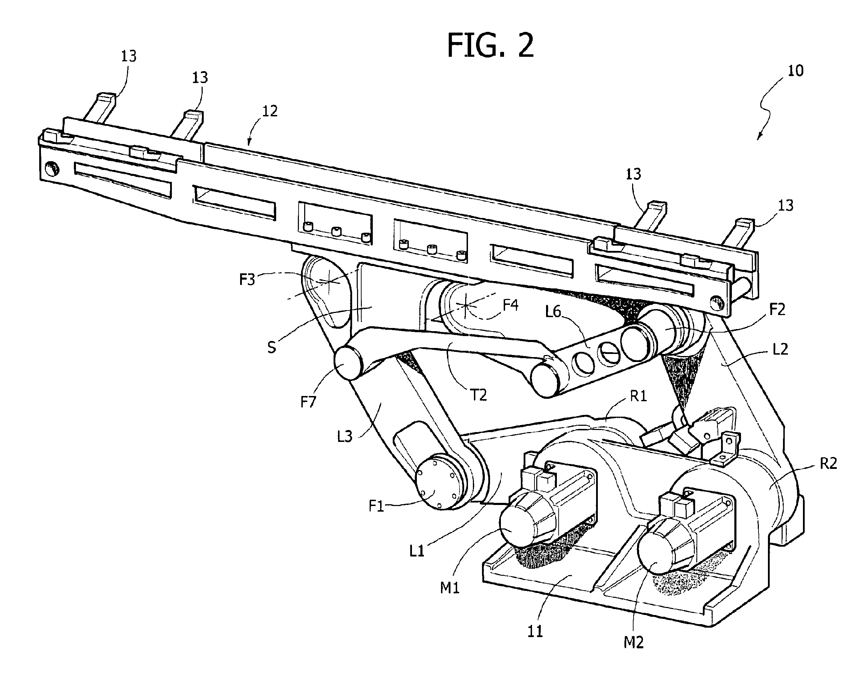

The main parts of the linkage illustrated in Figure 4 are also indicated in Figures 2 and 3. As may be seen in said figures, the top structure S has a general T-shaped configuration, with a top plane rigidly fixed to which is a longitudinal bar 12, carrying supporting means 13 for receiving and supporting one or more pieces being machined.

Thanks to the structure and arrangement described above, the transferring device 10 enables the supporting bar 12 to be brought underneath a piece to be picked up and said bar to be raised upwards so as to move the piece away from the structure on which it was provisionally resting in order to be subsequently displaced in the longitudinal direction A of the line until it is deposited again in the next station.

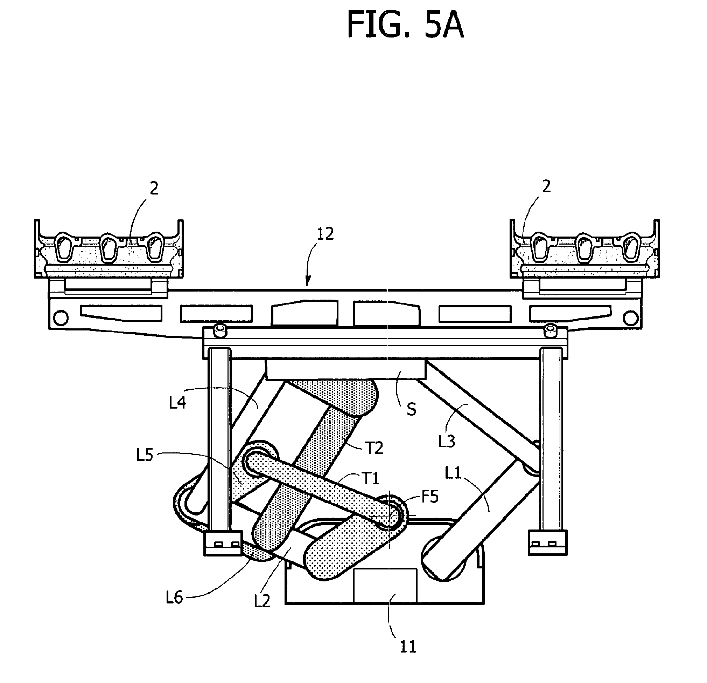

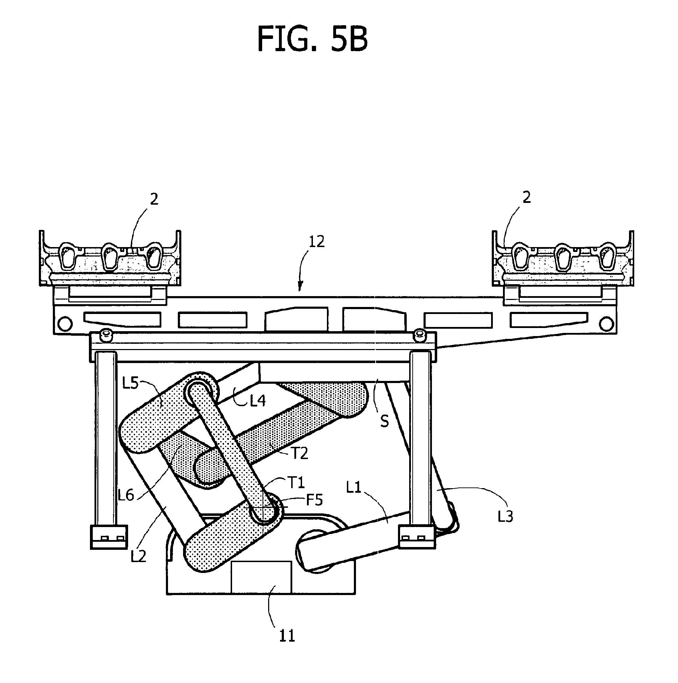

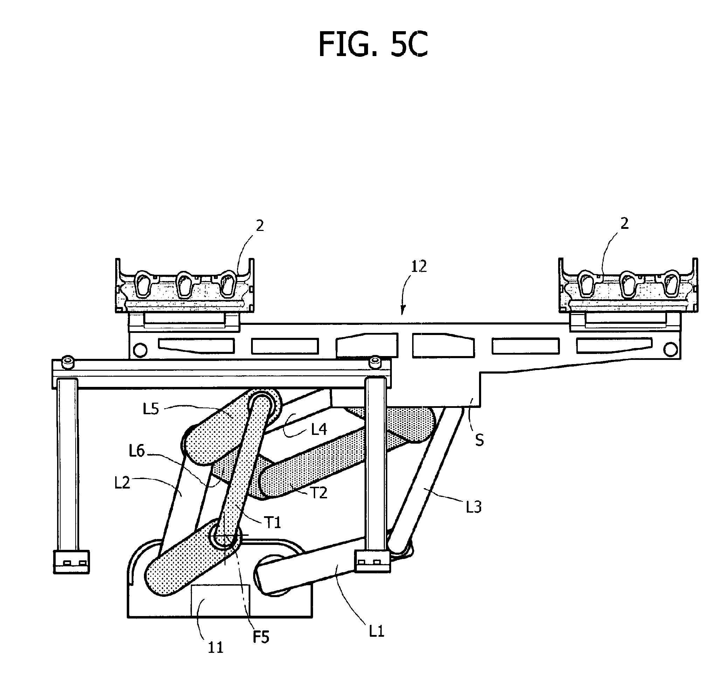

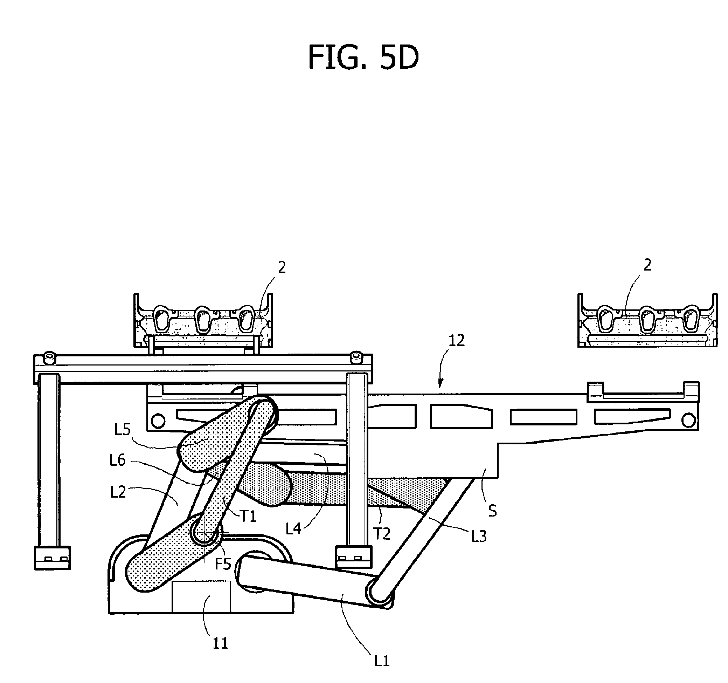

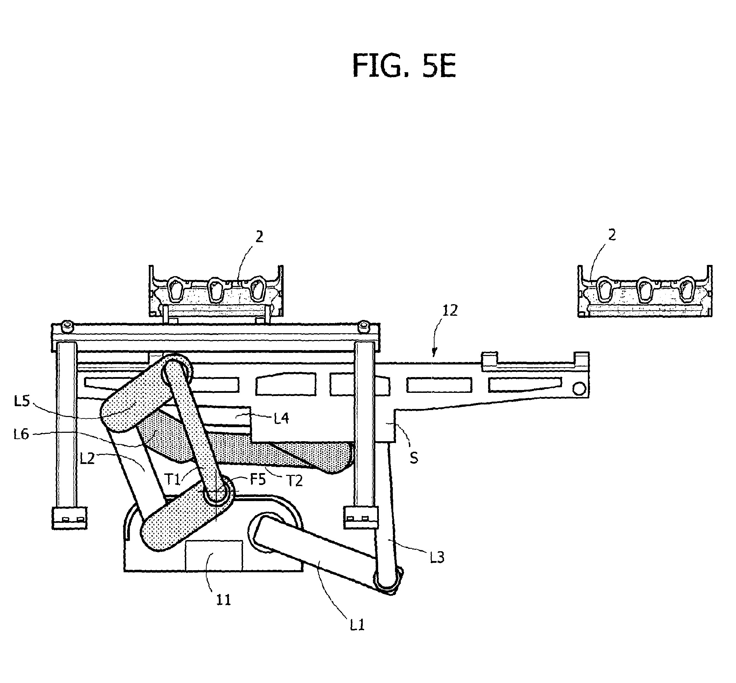

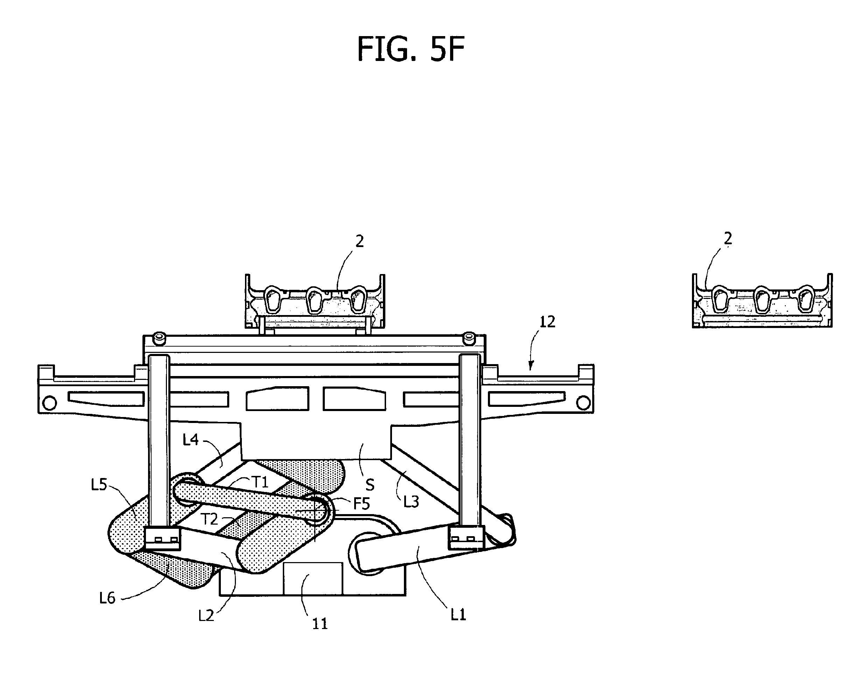

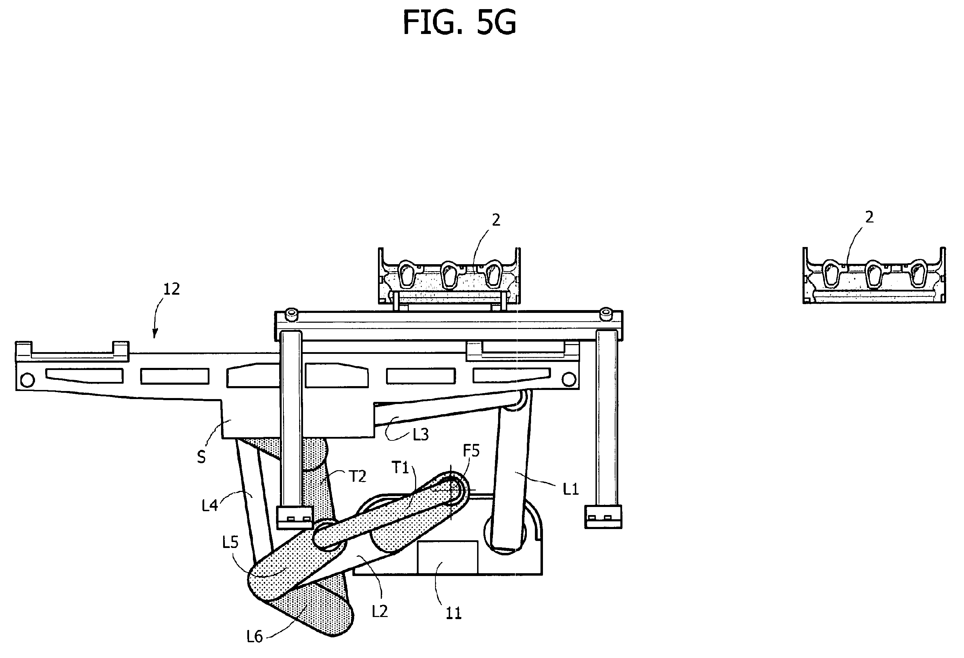

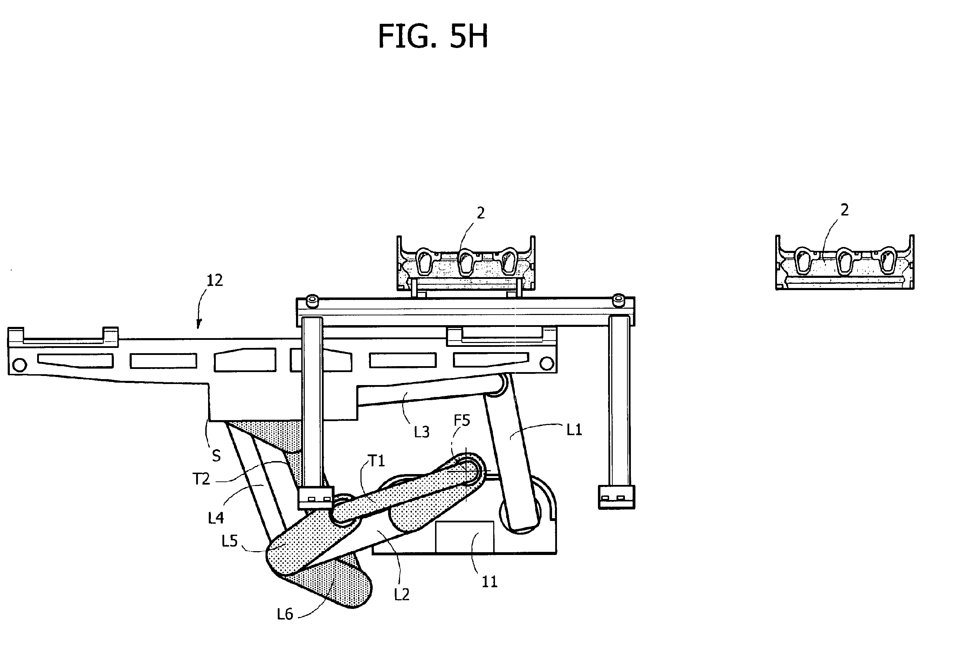

The sequence of Figures 5A-5H shows the successive configurations assumed by the device in the course of its cycle of movement, starting from a position in which the bar 12 is already raised and is transferring the pieces 2 as far as an advanced position, in which the bar is lowered to unload the pieces 2 onto the destination workstations, and then further backwards, passing underneath, until it returns into a position in which the bar, by rising, can load the pieces 2 on itself. In said figures, the arm T1 is articulated in F5 to a bracket that is rigidly connected to the base 11.

Figure 6 illustrates a variant, in which the device 10 is used in a position set upside-down. In this case, each bar 12 is obviously provided with gripping means, for example, in the form of grippers with jaws designed to engage within corresponding holes or recesses made in the piece being machined in order to suspend it securely from the structure of the beam 12.

Of course, the motors M1, M2 of the various transfer devices 10 of the line are controlled by an electronic control unit in order to optimize the movements of the pieces along the line as a function of the times of stoppage of each piece in each machining unit. Preferably, the electronic control unit is programmed so that as soon as machining of a piece in a given machining unit has terminated, the transfer devices downstream and upstream of the machining unit are ready for picking up the machined piece immediately and introducing into the unit a new piece to be machined so as to minimize the dead times and increase the productivity of the line.

As may moreover be seen, both in the case of the solution of Figure 1 and in the case of the solution of Figure 6, each transferring device 10 is provided with its fixed structure 11 in a position corresponding to an intermediate station 7 and is equipped with means for transferring simultaneously a pair of pieces along the line. In this way, at each step of a transferring device, a first piece exits from the machining unit set upstream and a second piece enters the machining unit set downstream.

Of course, without prejudice to the principle of the invention, the details of construction and the embodiments may vary widely with respect to what is described and illustrated herein purely by way of example, without thereby departing from the scope of the present invention.

## Claims

1. A line of operating units (5) for execution of a sequence of machining operations on a set of pieces (2) that are fed in succession at one loading end (8) of the line and proceed along the line as far as one unloading end (9) of the line,
in which said line comprises means (10) for transferring the pieces (2) from the loading end (8) to the first unit (5) of the line, from each unit (5) to the next one, and from the last unit (5) of the line to the unloading end (9),
**characterized in that** said transfer means include a plurality of transfer devices, each arranged upstream and/or downstream of a machining unit along the line, each transfer device including:
- a supporting structure (11);
- a pair of first arms (L1, L2) articulated to the supporting structure (11) about two mutually parallel horizontal axes (A1, A2);
- a pair of second arms (L3, L4), which have first ends articulated to the first arms (L1, L2) and second ends articulated to a mobile structure (S) about two mutually parallel horizontal axes (F3, F4);
- a first auxiliary arm and a second auxiliary arm (T1, T2), respectively, associated to one of said first arms (L2) and to one of said second arms (L4) and defining therewith a double articulated parallelogram, said first auxiliary arm (T1) having one end articulated to the supporting structure (11) about a horizontal axis (F5) parallel to said axes (A1, A2) of articulation of the first arms (L1, L2), and one opposite end articulated to a third auxiliary arm (L4) that is mounted oscillating about the axis (F2) of articulation between the first arm and the second arm (L2, L4) to which the double-articulated-parallelogram system is associated, said second auxiliary arm (T2) having one end articulated to a fourth auxiliary arm (L6), which is also mounted so that it can turn about said axis of articulation (F2) between said first and second arms (L2, L5) and which is connected rigidly to the aforesaid third auxiliary arm (L5) so as to form a predetermined angle with respect thereto, said second auxiliary arm (T2) having its second end articulated to the mobile structure (S) about an axis (F7) parallel to the aforesaid horizontal axes of articulation (F3, F4) of the second arms (L3, L4);
- a pair of motors (M1, M2) that control rotation of the two first arms (L1, L2) about their axes of articulation (A1, A2) on the aforesaid supporting structure (11) in a way independent of one another; and
- an electronic control unit that controls the electric motors (M1, M2) of all the transferring devices (10) of the line in a co-ordinated way, in order to reduce the dead times that elapse in replacement of the piece being machined in each operating unit of the line.

2. The line according to Claim 1, **characterized in that** said line comprises an intermediate waiting workstation (7) set upstream and downstream of each operating unit and **in that** each transferring device (10) is provided for transferring a piece from an intermediate workstation (7) to a machining workstation (3) of an operating unit (5) located downstream of said intermediate workstation (7) and/or for transferring a piece from a machining workstation (3) of a operating unit (5) located upstream of the intermediate workstation (7) to the latter.

3. The line according to Claim 2, **characterized in that** each transferring device (10) has its supporting structure (11) in a bottom position and its mobile structure (S) in a top position, each transferring device (10) being provided substantially in a position corresponding to a respective intermediate station (7) upstream and/or downstream of the workstation (3) of an operating unit (5) of the line.

4. The line according to Claim 2, **characterized in that** each transferring device (10) comprises its supporting structure (11) fixed in an overhead position above a fixed supporting frame and has its mobile structure (S) in a bottom position with respect to the supporting structure (11).

5. The line according to Claim 3, **characterized in that** the mobile structure (S) of each transferring device is provided with means for receiving and supporting one or more pieces resting on top of them.

6. The line according to Claim 4, **characterized in that** the mobile structure (S) of each transferring device is provided with gripping means for gripping and supporting from above one or more pieces (2).

7. The line according to any one of the preceding claims, **characterized in that** the mobile structure (S) of each transferring device (10) is provided with means for transferring a number of pieces (2) simultaneously along the line.

## Patentansprüche

1. Straße von Betriebseinheiten (5) zur Durchführung einer Folge von Bearbeitungsvorgängen an einer Gruppe von Teilen (2), die nacheinander an einem Ladeende (8) der Straße zugeführt werden und entlang der Straße laufen bis zu einem Entladeende (9) der Straße,
wobei die Straße Mittel (10) zum Transport der Teile (2) von dem Ladeende (8) zur ersten Einheit (5) der Straße, von jeder Einheit (5) zur nächsten und von der letzten Einheit (5) der Straße zu dem Entladeende (9) aufweist,
**dadurch gekennzeichnet, dass** die Transportmittel mehrere Transportvorrichtungen aufweisen, die jeweils vor und/oder nach einer Bearbeitungseinheit entlang der Straße angeordnet sind, wobei jede Transportvorrichtung Folgendes aufweist:
- eine Tragkonstruktion (11);
- ein Paar erster Arme (L1, L2), die beweglich mit der Tragkonstruktion (11) um zwei zueinander parallele horizontale Achsen (A1, A2) herum verbunden sind;
- ein Paar zweiter Arme (L3, L4), die erste Enden aufweisen, die mit den ersten Armen (L1, L2) beweglich verbunden sind, und zweite Enden, die mit einer Mobilkonstruktion (S) um zwei zueinander parallele horizontale Achsen (F3, F4) herum beweglich verbunden sind;
- einen ersten Hilfsarm und einen zweiten Hilfsarm (T1, T2), die jeweils mit einem der ersten Arme (L2) und einem der zweiten Arme (L4) verbunden sind und die **dadurch** ein Doppelgelenk-Parallelogramm festlegen, wobei der erste Hilfsarm (T1) ein Ende aufweist, das mit der Tragkonstruktion (11) um eine horizontale Achse (F5) herum, die parallel zu den Gelenkachsen (A1, A2) der ersten Arme (L1, L2) verläuft, beweglich verbunden ist, und ein gegenüberliegendes Ende, das beweglich verbunden ist mit einem dritten Hilfsarm (L4), der um die Gelenkachse (F2) herum schwingend zwischen dem ersten Arm und dem zweiten Arm (L2, L4), mit dem das Doppelgelenk-Parallelogrammsystem verbunden ist, befestigt ist, wobei bei dem zweiten Hilfsarm (T2) ein Ende beweglich verbunden ist mit einem vierten Hilfsarm (L6), welcher ebenfalls so befestigt ist, dass er sich um die Gelenkachse (F2) zwischen dem ersten und dem zweiten Arm (L2, L5) drehen kann und der fest mit dem vorgenannten dritten Hilfsarm (L5) verbunden ist, um einen vorgegebenen Winkel in Bezug darauf zu bilden, wobei bei dem zweiten Hilfsarm (T2) das zweite Ende mit der Mobilkonstruktion (S) um eine Achse (F7), die parallel zu den vorgenannten horizontalen Gelenkachsen (F3, F4) der zweiten Arme (L3, L4) verläuft, beweglich verbunden ist;
- ein Paar Motoren (M1, M2), die die Rotation der beiden ersten Arme (L1, L2) um ihre Gelenkachsen (A1, A2) herum auf der vorgenannten Tragkonstruktion (11) auf voneinander unabhängige Art und Weise steuern; und
- eine elektronische Steuereinheit, die die elektrischen Motoren (M1, M2) sämtlicher Transportvorrichtungen (10) der Straße auf koordinierte Art und Weise steuert, um die Totzeiten, die bei dem Austausch des gerade bearbeiteten Teils in jeder Betriebseinheit der Straße vergehen, zu verringern.

2. Straße nach Anspruch 1, **dadurch gekennzeichnet, dass** die Straße eine zwischengeschaltete Wartebearbeitungsstation (7) aufweist, die vor und nach jeder Betriebseinheit angeordnet ist, und dass jede Transportvorrichtung (10) dafür vorgesehen ist, ein Teil von einer zwischengeschalteten Bearbeitungsstation (7) zu einer maschinellen Bearbeitungsstation (3) einer Betriebseinheit (5) zu transportieren, die der zwischengeschalteten Bearbeitungsstation (7) nachgeschaltet ist, und/oder ein Teil von einer maschinellen Bearbeitungsstation (3) einer Betriebseinheit (5), die der zwischengeschalteten Bearbeitungsstation (7) vorgeschaltet ist, zur letzteren zu transportieren.

3. Straße nach Anspruch 2, **dadurch gekennzeichnet, dass** jede Transportvorrichtung (10) ihre Tragkonstruktion (11) in einer unteren Position und ihre Mobilkonstruktion (S) in einer oberen Position aufweist, wobei jede Transportvorrichtung (10) im Wesentlichen in einer Position vorgesehen ist, die einer jeweiligen Zwischenstation (7) vor und/oder nach der Bearbeitungsstation (3) einer Betriebseinheit (5) der Straße entspricht.

4. Straße nach Anspruch 2, **dadurch gekennzeichnet, dass** jede Transportvorrichtung (10) ihre Tragkonstruktion (11) in einer hoch liegenden Position über einem befestigten Stützrahmen angebracht aufweist und ihre Mobilkonstruktion (S) in einer untenliegenden Position mit Bezug auf die Tragkonstruktion (11) aufweist.

5. Straße nach Anspruch 3, **dadurch gekennzeichnet, dass** die Mobilkonstruktion (S) jeder Transportvorrichtung mit Mitteln zum Aufnehmen und Tragen eines oder mehrerer Teile, die sich oben auf ihnen befinden, versehen ist.

6. Straße nach Anspruch 4, **dadurch gekennzeichnet, dass** die Mobilkonstruktion (S) jeder Transportvorrichtung mit Greifmitteln zum Greifen und Tragen eines oder mehrerer Teile (2) von oben her versehen ist.

7. Straße nach einem der vorhergehenden Ansprüche, **dadurch gekennzeichnet, dass** die Mobilkonstruktion (S) jeder Transportvorrichtung (10) mit Mitteln zum gleichzeitigen Transportieren einer Anzahl von Teilen (2) entlang der Straße versehen ist.

## Revendications

1. Chaîne d'unités de production (5) pour l'exécution d'une séquence d'opérations d'usinage sur un ensemble de pièces (2) qui sont alimentées successivement au niveau d'une extrémité de chargement (8) de la chaîne et continuent le long de la chaîne jusqu'à une extrémité de déchargement (9) de la chaîne,
dans laquelle ladite chaîne comprend des moyens (10) pour transférer les pièces (2) de l'extrémité de chargement (8) à la première unité (5) de la chaîne, de chaque unité (5) à la suivante, et de la dernière unité (5) de la chaîne à l'extrémité de déchargement (9),
**caractérisée en ce que** lesdits moyens de transfert comprennent une pluralité de dispositifs de transfert chacun agencé en amont et/ou en aval d'une unité d'usinage le long de la chaîne, chaque dispositif de transfert comprenant :
- une structure de support (11) ;
- une paire de premiers bras (L1, L2) articulés sur la structure de support (11) autour de deux axes horizontaux mutuellement parallèles (A1, A2) ;
- une paire de seconds bras (L3, L4), qui ont des premières extrémités articulées sur les premiers bras (L1, L2) et des secondes extrémités articulées sur une structure mobile (S) autour de deux axes horizontaux mutuellement parallèles (F3, F4);
un premier bras auxiliaire et un second bras auxiliaire (T1, T2), respectivement, associés à l'un desdits premiers bras (L2), et à l'un desdits seconds bras (L4) et définissant avec ceux-ci un double parallélogramme articulé, ledit premier bras auxiliaire (T1) ayant une extrémité articulée sur la structure de support (11) autour d'un axe horizontal (F5) parallèle auxdits axes (A1, A2) de l'articulation des premiers bras (L1, L2), et une extrémité opposée articulée sur un troisième bras auxiliaire (L4) qui est monté de manière oscillante autour de l'axe (F2) de l'articulation entre le premier bras et le second bras (L2, L4) auquel le système de double parallélogramme articulé est associé, ledit second bras auxiliaire (T2) ayant une extrémité articulée sur un quatrième bras auxiliaire (L6), qui est également monté de sorte qu'il peut tourner autour dudit axe d'articulation (F2) entre lesdits premier et second bras (L2, L5) et qui est raccordé de manière rigide au troisième bras auxiliaire (L5) mentionné précédemment afin de former un angle prédéterminé par rapport à celui-ci, ledit second bras auxiliaire (T2) ayant sa seconde extrémité articulée sur la structure mobile (S) autour d'un axe (F7) parallèle aux axes horizontaux d'articulation (F3, F4) mentionnés précédemment des seconds bras (L3, L4) ;
- une paire de moteurs (M1, M2) qui commande la rotation des deux premiers bras (L1, L2) autour de leurs axes d'articulation (A1, A2) sur la structure de support (11) mentionnée précédemment d'une manière indépendante l'un de l'autre ; et
- une unité de commande électronique qui commande les moteurs électriques (M1, M2) de tous les dispositifs de transfert (10) de la chaîne d'une manière coordonnée, afin de réduire les temps morts qui s'écoulent lors du remplacement de la pièce qui est usinée dans chaque unité de production de la chaîne.

2. Chaîne selon la revendication 1, **caractérisée en ce que** ladite chaîne comprend un poste de travail d'attente intermédiaire (7) placé en amont et en aval de chaque unité de production et **en ce que** chaque dispositif de transfert (10) est prévu pour transférer une pièce d'un poste de travail intermédiaire (7) à un poste de travail d'usinage (3) d'une unité de production (5) située en aval dudit poste de travail intermédiaire (7) et/ou pour transférer une pièce d'un poste de travail d'usinage (3) d'une unité de production (5) située en amont du poste de travail intermédiaire (7) jusqu'à ce dernier.

3. Chaîne selon la revendication 2, **caractérisée en ce que** chaque dispositif de transfert (10) a sa structure de support (11) dans une position basse et sa structure mobile (S) dans une position haute, chaque dispositif de transfert (10) étant prévu sensiblement dans une position correspondant à un poste intermédiaire (7) respective en amont et/ou en aval du poste de travail (3) d'une unité de production (5) de la chaîne.

4. Chaîne selon la revendication 2, **caractérisée en ce que** chaque dispositif de transfert (10) comprend sa structure de support (11) fixée dans une position en suspension au-dessus d'un châssis de support fixe et a sa structure mobile (S) dans une position basse par rapport à la structure de support (11).

5. Chaîne selon la revendication 3, **caractérisée en ce que** la structure mobile (S) de chaque dispositif de transfert est prévue avec des moyens pour recevoir et supporter une ou plusieurs pièces reposant les unes sur les autres.

6. Chaîne selon la revendication 4, **caractérisée en ce que** la structure mobile (S) de chaque dispositif de transfert est prévue avec des moyens de préhension pour saisir et supporter à partir de dessus une ou plusieurs pièces (2).

7. Chaîne selon l'une quelconque des revendications précédentes, **caractérisée en ce que** la structure mobile (S) de chaque dispositif de transfert (10) est prévue avec des moyens pour transférer un certain nombre de pièces (2) simultanément le long de la chaîne.
